**Europäisches Patentamt**

**European Patent Office**

**Office européen des brevets**

(19)

(11) Veröffentlichungsnummer: **0 144 754**
**B1**

## (12) EUROPÄISCHE PATENTSCHRIFT

(45) Veröffentlichungstag der Patentschrift:
15.07.87

(51) Int. Cl.⁴: **H 02 M 3/335**

(21) Anmeldenummer: **84113288.9**

(22) Anmeldetag: **05.11.84**

(54) **Sperrwandler-Schaltnetzteil.**

(30) Priorität: **07.11.83 DE 3340138**

(43) Veröffentlichungstag der Anmeldung:
**19.06.85 Patentblatt 85/25**

(45) Bekanntmachung des Hinweises auf die Patenterteilung:
**15.07.87 Patentblatt 87/29**

(84) Benannte Vertragsstaaten:
**AT DE FR GB IT NL**

(56) Entgegenhaltungen:
**EP - A - 0 046 515**
**DE - A - 2 819 225**
**DE - A - 3 312 209**
**US - A - 3 771 040**

(73) Patentinhaber: **Siemens Aktiengesellschaft Berlin und München, Wittelsbacherplatz 2, D-8000 München 2 (DE)**

(72) Erfinder: **Peruth, Günther, Dipl.-Ing.,
Franz-Wolter-Strasse 13, D-8000 München 81 (DE)**
Erfinder: **Lenz, Michael, Dipl.-Ing.,
Fischbachauerstrasse 3, D-8000 München 90 (DE)**

## Beschreibung

Die vorliegende Erfindung betrifft einen Sperrwandler-Schaltnetzteil zur Versorgung eines elektrischen Geräts gemäss Oberbegriff des Patentanspruches 1.

Insbesondere handelt es sich dabei um einen solchen Schaltnetzteil, bei dem ferner eine Anlaufschaltung zur weiteren Steuerung der Steuerelektrode des Schalttransistors vorgesehen ist und bei der schliesslich die Regelschaltung derart aufgebaut ist, dass ihre Stromversorgung mittels einer Sekundärwicklung des Transformators gegeben ist, die einerseits einen der Regelspannungserzeugung dienenden Schaltungsteil mit einem nachgeschalteten Regelverstärker und andererseits einen der Impulsaufbereitung dienenden Schaltungsteil enthält, wobei sowohl der Ausgang des Regelverstärkers als auch der Ausgang der Impulsaufbereitungsanlage an je einen Eingang eines die Steuerelektrode des Schalttransistors beaufschlagenden und den Ausgang der Regelschaltung bildenden Pulsdauer-Modulators geschaltet ist, während ein dritter Eingang des Pulsdauer-Modulators von einem Strom-Spannungswandler beaufschlagt ist.

Ein solcher Sperrwandlerschaltnetzteil entsprechend der soeben gebrachten Modifikation ist in der EP-A-0 046 515 (= DE-A-3 032 034) beschrieben. Als weiterer Stand der Technik kann «Funkschau» (1975) H. 5, S. 40-43, und das Buch von Wüstehube u.a. mit dem Titel «Schaltnetzteile» [erschienen 1979 im expert-Verlag, VDE-Verlag (vgl. insbesondere S. 87 ff.)] sowie Siemens «Schaltnetzteile mit der IS TDA 4600», S. 7 ff. genannt werden.

Bekanntlich hat ein solcher Schaltnetzteil die Aufgabe, ein elektrisches Gerät, z.B. einen Fernsehempfänger, mit stabilisierten und geregelten Betriebsspannungen zu versorgen. Der Kern eines solchen Schaltnetzteils ist deshalb durch eine Regelschaltung gegeben, deren Stellglied durch den eingangs genannten und insbesondere durch einen bipolaren Leistungstransistor realisierten Schalttransistor gegeben ist. Weiter ist eine hohe Arbeitsfrequenz und ein auf hohe Betriebsfrequenz ausgerichteter Transformator vorgesehen, da im allgemeinen eine weitgehende Absonderung des zu versorgenden elektrischen Geräts vom Versorgungsnetz erwünscht ist. Solche Schaltnetzteile können entweder nach dem synchronisierten Betrieb oder nach dem selbstschwindenden Betrieb ausgelegt sein. Letzteres gilt für einen Schaltnetzteil, mit dem sich die vorliegende Erfindung befasst und wie er auch in der EP-A-0 046 515 beschrieben ist.

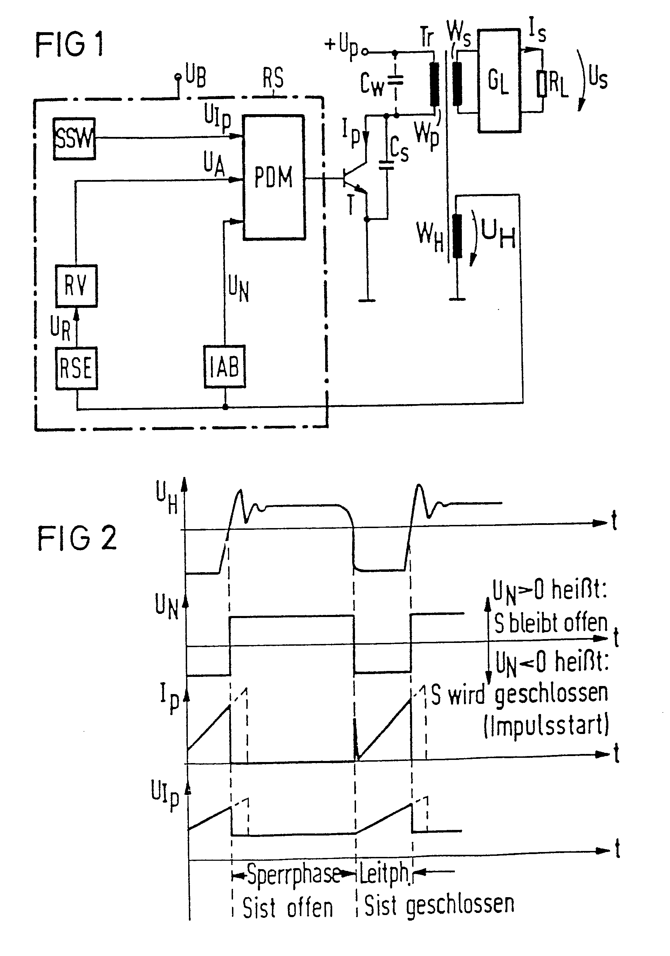

Das zu einem solchen Schaltnetzteil gehörende Prinzipschaltbild ist in Fig. 1 dargestellt, auf die zunächst eingegangen werden soll.

Ein npn-Leistungstransistor T dient als Stellglied für die Regelschaltung und ist mit seiner Emitter-Kollektorstrecke in Serie mit der Primärwicklung $W_p$ eines Transformators Tr geschaltet. Dabei kann unter Bezugnahme auf die Fig. 1 der EP-A-0 046 515 festgestellt werden, dass die für den Betrieb dieser Serienschaltung dienende Gleichspannung $U_p$ mittels einer vom Wechselstromnetz betriebenen Gleichrichterschaltung, z.B. einer Grätz-Schaltung, erhalten wird. Im Falle der Verwendung eines npn-Transistors T liegt dessen Emitter am Bezugspotential (Masse), der Kollektor an der Primärwicklung $W_p$ des Transformators Tr und das andere Ende dieser Primärwicklung an dem von der genannten (aber in der Zeichnung nicht dargestellten) Gleichrichterschaltung gelieferten Versorgungspotential $U_p$. Die Emitter-Kollektorstrecke des Schalttransistors T ist von einem Kondensator $C_s$ überbrückt. Die in Fig. 1 dargestellte und an der Primärwicklung $W_p$ liegende Kapazität $C_w$ ist hingegen von parasitärer Natur. Der Schalttransistor T ist an seiner Basis durch den Ausgangsteil der Regelschaltung RS, d.h. im Falle der Ausgestaltung gemäss Fig. 1, durch einen Pulsdauer-Modulator PDM, gesteuert.

Eine Hilfswicklung $W_H$ des Transformators Tr dient als Sensor für die Regelschaltung RS und liegt daher mit dem einen Ende an dem besagten Bezugspotential und mit dem anderen Ende am Eingang der Regelschaltung RS. Eine weitere Wicklung $W_s$ bildet die eigentliche Sekundärseite des Transformators Tr. Sie dient zur Versorgung einer Gleichrichteranlage GL, deren Ausgang zur Versorgung des elektrischen Geräts $R_L$ mittels einer Gleichspannung $U_s$ vorgesehen ist.

Bei der in Fig. 1 dargestellten bevorzugten Ausgestaltung eines Sperrwandler-Schaltnetzteils enthält die Regelschaltung RS neben dem bereits genannten und als Pulsdauer-Modulator ausgebildeten Ausgangsteil PDM zwei durch die Hilfswicklung $W_H$ gesteuerte Eingangsteile, wobei der eine Eingangsteil RSE der Regelspannungserzeugung dient und über einen Regelverstärker RV ein Steuersignal $U_A$ für den Ausgangsteil PDM abgibt. Der andere Eingangsteil IAB dient der Impulsaufbereitung und liefert ein Signal $U_N$ an den Ausgangsteil PDM der Regelschaltung RS. Schliesslich ist noch ein Strom-Spannungswandler SSW vorgesehen, der die Istwertsteuerung der Regelschaltung bildet und eine dem Primärstrom $J_p$ proportionale Spannung $U_{Jp}$ an den Pulsdauer-Modulator PDM abgibt.

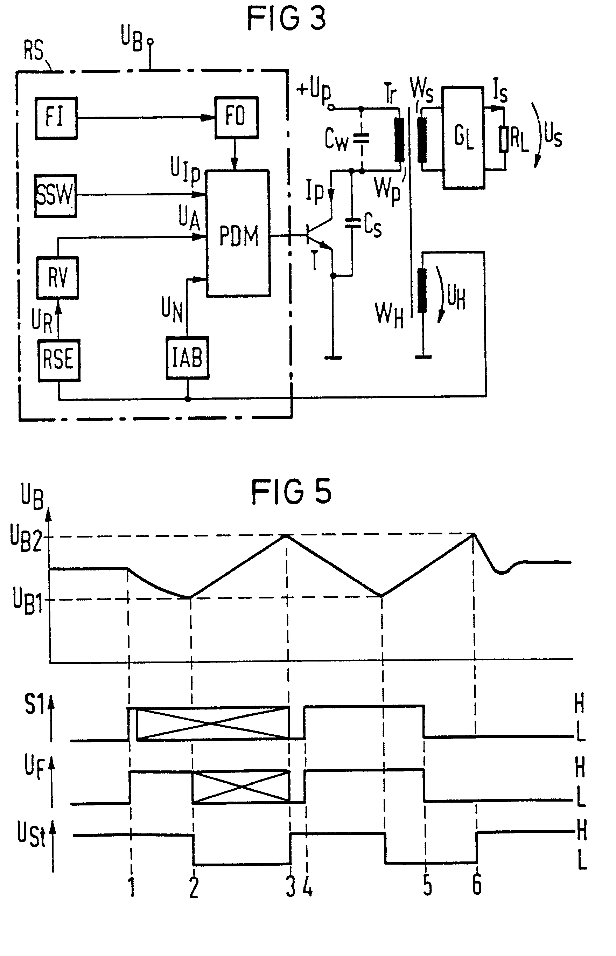

Die zuletzt genannten Teile der Regelschaltung RS sind ebenfalls in der EP-A-0 046 515 angegeben. Sie gehören zu der dort in Fig. 3 dargestellten Regelschaltung. Die Regelspannungserzeugung RSE ist durch die dort aus Fig. 1 und Fig. 2 ersichtlichen Widerstände R5 und R4 gegeben. Die Impulsaufbereitung IAB besteht aus der in Fig. 3 der DE-OS ersichtlichen Nulldurchgangsidentifikation und der durch sie beaufschlagten Steuerlogik. Der Pulsdauer-Modulator PDM ist schliesslich durch die in der EP-A-0 046 515 angedeutete Triggerschaltung mit dem durch sie beaufschlagten Teil der Steuerlogik gegeben.

An einer weiteren Klemme der Regelschaltung RS liegt die Betriebsspannung $U_B$, die zur Versorgung der Regelschaltung RS dient und durch die einerseits das Bezugspotential (Masse) und andererseits das an der genannten Klemme liegende Versorgungspotential gegeben ist.

Das zu einer Schaltung gemäss der hier vorliegenden Fig. 1 gehörende Zeitdiagramm, also das zeitliche Verhalten der in der Regelschaltung RS auftretenden Signale $U_H$ (= das von der Transformator-Hilfswicklung $W_H$ zur Steuerung der Regelschaltung RS abgegebene Signal), $U_N$ ( = das von der Impuls-aufbereitung IAB gelieferte Signal), $I_p$ ( = der von der mit dem Schalttransistor T in Serie liegenden Trans-formatorwicklung $W_p$ gelieferte Strom) und $U_{Ip}$ ( = das vom Strom-Spannungswandler SSW gelieferte Istwertsignal), ist in Fig. 2 dargestellt.

Ersichtlich liefert die von der Transformatorwicklung $W_H$ gelieferte Spannung $U_H$ mit dem Nulldurchgang ($U_H$ = 0 V) die Information, dass die im Transformator Tr gespeicherte Energie abgeflossen ist und ein neuer Ladezyklus beginnen — d.h. der von dem Transistor T gegebene Schalter geschlossen werden — kann. Über die Impulsaufbereitungsstufe IAB wird diese Information dem Pulsdauer-Modulator PDM mitgeteilt. Es gilt dabei: $U_N < 0$ V → Impulsstart, $U_N > 0$ V → kein Impulsstart möglich.

Weiterhin gewinnt man aus der von der Hilfswicklung $W_H$ des Transformators Tr gelieferten Hilfsspannung $U_H$ mit Hilfe des Regelspannungserzeugers RSE eine zur Sekundärspannung $U_s$ proportio-nale Regelspannung $U_R$. Im Regelverstärker RV wird die Regelspannung mit einer Referenz ( = Sollwert) verglichen. Die Differenz zwischen der Regelspannung $U_R$ und der Referenz ( = Regelabweichung) wird vom Regelverstärker RV verstärkt und die von dessen Ausgang gelieferte Signalspannung $U_A$ dem Pulsdauer-Modulator PDM mitgeteilt, der sie mit dem Signal $U_{Ip}$ des Strom-Spannungswandlers SSW vergleicht und den durch den Transistor T gegebenen Schalter öffnet, sobald $U_{Ip} \geqq U_A$ gilt. Auf diese Wei-se wird der Spitzenwert $I_{pmax}$ von $I_p$ so lange korri-giert, bis die Differenz zwischen $U_R$ und der Referenzspannung verschwindet. Dies bedeutet, dass $U_R$ und damit $U_s$ konstant bleiben.

Tritt nun bei einem Sperrwandler-Schaltnetzteil der beschriebenen Art und allgemeiner der eingangs definierten Art ein Fehler in der Regelspannungserzeugung RSE oder in der Spannungsversorgung der Regelschaltung RS auf, so ist die Folge, dass die Spannung $U_p$ unzulässig hohe Werte annimmt, was andererseits zu einer entsprechenden Überhöhung der Sekundärspannung $U_s$ und damit ggf. zu Zerstörungen in der vom Schaltnetzteil beaufschlagten elektronischen Schaltung $R_L$ führen kann. Um hier eine Abhilfe zu schaffen ist in der gemäss Art 54(3) EPÜ zum Stand der Technik gehörenden EP-A-0 139 226 eine Ausgestaltung eines der bisher ge-brachten Beschreibung entsprechenden Sperrwand-ler-Schaltnetzteils vorgeschlagen, bei der zusätzlich eine bei ordnungsgemässem Betrieb der Regelschaltung RS inaktive Störschutzschaltung vorgesehen ist, die ihrerseits durch eine Sekundärwicklung des Transformators Tr, z.B. durch die Hilfswicklung $W_H$, beaufschlagt ist und die derart ausgestaltet ist, dass sie spontan mit dem Überschreiten eines vorgesehenen Grenzwerts durch den in dieser Sekundärwicklung entstehenden Strom den gemeinsam über den Schalttransistor T und die Primärwicklung $W_p$ flies-senden Strom ausschaltet. Dort ist auch eine günstige Ausgestaltung für eine solche Störschutzschaltung näher beschrieben.

Bei dieser Störschutzschaltung ist nun vorgesehen, dass die Aktivierung des Schalttransistors T durch den Ausgang der Regelschaltung RS aufgrund der Einwirkung der aktivierten Störschutzschaltung so lange blockiert ist, bis der Einfluss des die Störschutzschaltung aktivierenden und z.B. durch Fehlfunktion in der Regelschaltung bedingten Störverhaltens sich wieder abgebaut hat oder auf eine sonstige Weise ausgeglichen worden ist. Dann tritt automatisch eine Aufhebung der Blockierung und damit die Aktivierung der Steuerung des Schalttransistors T durch die Regelschaltung RS wieder ein.

Bei einer solchen Lösung des genannten Problems besteht die Wirkung darin, dass einzelne Steuerimpulse für den Schalttransistor T unterdrückt werden. Dies führt aber häufig dazu, dass die Verlustleistung, vor allem im Schalttransistor T, sehr gross werden kann. Es ist deshalb eine Lösung des oben beschriebenen Problems dahingehend erwünscht, dass die Verlustleistung im Sperrwandler-Schaltnetzteil erheblich abgesenkt wird. Mit dieser Aufgabe befasst sich die vorliegende Erfindung.

Gemäss der vorliegenden Erfindung ist hierzu ein der eingangs gegebenen Definition entsprechender Schaltnetzteil gemäss den Merkmalen des kennzeichnenden Teils des Patentanspruches 1 ausgebildet.

Eine der Erfindung entsprechende Ausgestaltung des Sperrwandler-Schaltnetzteils verhindert dass der aufgrund der Wirkung der — im Normalbetrieb der Regelschaltung, wie aus Fig. 2 ersichtlich, ebenfalls das Zeitverhalten eines Oszillators aufweisende Sperrwandler-Schaltnetzteil mit seiner hohen Frequenz, z.B. 30 kHz, weiterschwingt, sobald der gemäss der Erfindung zusätzlich vorgesehene und die Unterbrechungsimpulse abgebende Oszillator aktiviert ist. Statt dessen wird eben dieser mit einer merklich niedrigeren Frequenz schwingende Zusatzoszillator so lange den Einfluss der an sich im norma-len Betrieb weiterarbeitenden Regelschaltung modu-lieren, solange irgend eine der für die Aktivierung des zusätzlichen Oszillators — und zwar über einen ge-meinsamen Fehlerindikator — vorgesehenen Fehl-funktionen wirksam ist, was durch den Fehlerindikator angezeigt wird. Diese Modulation bedingt, dass unmittelbar nach dem Abklingen jedes Unterbrechungsimpulses automatisch ein Normalanlauf des Schaltnetzteilbetriebs begonnen wird. Dieser Normalablauf wird jedoch bei Vorhandensein bzw. Nochvorhandensein einer Störung automatisch wieder unterbrochen bzw. völlig unterdrückt. Jedoch schwingt der zusätzliche Oszillator weiter und startet automatisch nach dem Abklingen des nächsten Unterbrechungsimpulses den nächsten Abfragezyklus, d.h. die erneute Reaktivierung der Regelschaltung RS.

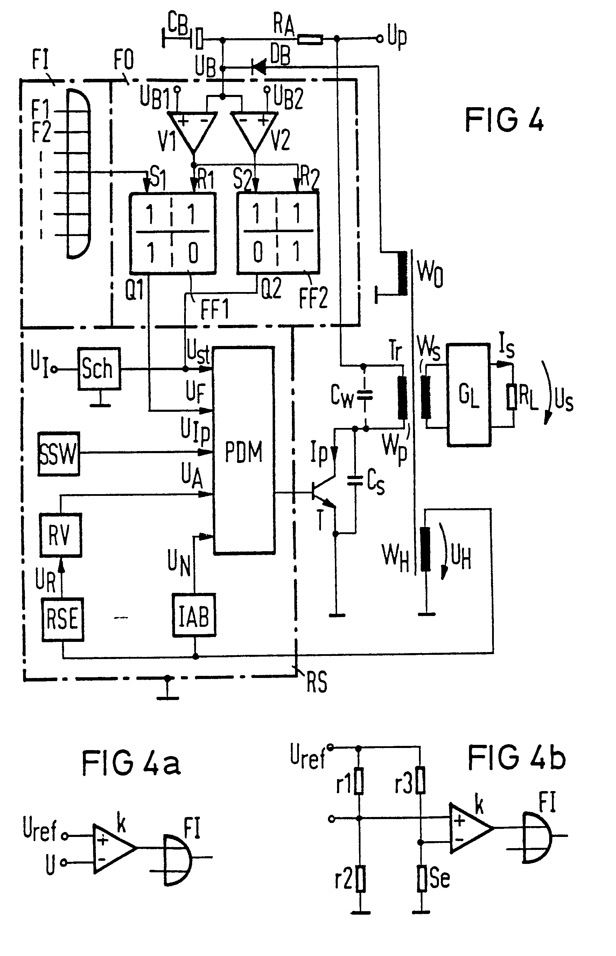

Ein Blockschaltbild der gemäss der Erfindung ausgestalteten Schaltung für einen Sperrwandler-Schaltnetzteil ist in Fig. 3, eine bevorzugte Ausgestaltung für den gemäss der Erfindung vorgesehenen weiteren Oszillator und dessen Beaufschlagung durch Fehlerquellen ist in Fig. 4 und die hierdurch bedingte Ergänzung des Zeitdiagramms gemäss Fig. 2 in Fig. 5 dargestellt.

Wie aus Fig. 3 ersichtlich, ist die Schaltung gemäss Fig. 1 für einen Sperrwandler-Schaltnetzteil durch einen die genannten Unterbrechungsimpulse liefernden Schaltungsteil FO ergänzt, der seinerseits durch einen auf die verschiedenen Fehlermöglichkeiten, die zu einer Gefährdung des Schaltnetzteils bzw. der von ihm versorgten Folgeschaltung $R_L$ führen können, ansprechenden Schaltungsteil FI, nämlich den bereits genannten Fehlerindikator, zu aktivieren ist.

Eine zweckmässige und günstige Ausgestaltung dieser beiden Schaltungsteile ist in Fig.4 gezeigt. Bei dieser Ausgestaltung können im Prinzip beliebig viele Fehlerfunktionen über den Indikator FI zur Aktivierung der Oszillatorschaltung FO wirksam eingesetzt werden, indem ein die betreffenden Fehlerfunktionen überwachender Sensor zur Steuerung des Fehlerindikators FI und damit zur Aktivierung des Oszillators FO verwendet wird. Man erkennt dabei, dass somit die die Oszillatorschaltung aktivierenden Fehlerfunktionen ohne Hysterese ausgeführt werden können, da der Oszillatorschaltungsteil FO im getriggerten Zustand wenigstens eine Periode lang schwingt.

Der Fehlerindikator FI kann die verschiedensten Schutzfunktionen umfassen, wie z.B. die Überschreitung eines vorgesehenen Maximalwerts bzw. die Unterschreitung eines vorgesehenen Minimalwerts für die Sekundärspannung $U_s$ am Eingang der durch den Schaltnetzteil zu versorgenden elektronischen Anlage $R_L$ oder für die Primärspannung $U_p$ oder für die Betriebsspannung $U_B$ oder auch beim Auftreten von Übertemperaturen im Schaltkreis.

Am einfachsten geschieht dies, indem, wie aus Fig. 4 ersichtlich, der Fehlerindikator FI als ODER-Gatter ausgebildet ist, dessen einzelne Eingänge F1, F2, ... von jeweils einem Komparator gesteuert werden, der seinerseits die von einem die zu dem betreffenden Eingang gehörende Fehlerquelle F1 bzw. F2 usw. jeweils überwachenden Sensor gelieferte Spannung mit einer festen Referenzspannung vergleicht und der beim Wechsel des Vorzeichens des Vergleichsergebnisses eine logische «1» an den ihm zugeordneten Eingang des ODER-Gatters FI abgibt. Die Folge einer solchen «1» ist eine logische «1» am Ausgang des ODER-Gatters FI, die dann diese an den Setzeingang S1 eines ersten statischen Flip-Flops FF1, insbesondere eines set-dominanten RS-Flip-Flops, weitergibt, dessen Informationsausgang Q1 unmittelbar zur Steuerung eines ihm zugeordneten Eingangs des — insbesondere als UND-Gatter ausgebildeten — Ausgangsteils PDM, also des Pulsdauer-Modulators, dient.

Der Reseteingang R1 des genannten ersten Flip-Flops FF1, das bereits zum eigentlichen Oszillator FO gehört, wird durch den Ausgang eines Komparators V1 gesteuert, der seinerseits bevorzugt als Operationsverstärker ausgebildet ist. Der Ausgang dieses Komparators V1 steuert ausserdem den Reseteingang R2 eines zweiten statischen Flip-Flops FF2 (das vorzugsweise durch ein reset-dominantes RS-Flip-Flop gegeben ist) dessen Informationsausgang Q2 ebenfalls zur Steuerung eines ihm eigens zugeordneten weiteren Eingangs des Ausgangsteils PDM der Regelschaltung RS vorgesehen ist. Ein dem ersten Komparator V1 ähnlicher Komparator V2 liegt mit seinem Ausgang am Setzeingang S2 des zweiten Flip-Flops FF2, dessen Ausgang Q2 ebenfalls an einem ihm eigens zugeordneten Eingang von PDM liegt. Die Primärwicklung $W_p$ des Transformators Tr bzw. das an ihrem dem Schalttransistor T abgewandten Ende liegende Versorgungspotential $+U_p$ der Primärseite des Transformators Tr ist über $R_A$ an je einen Eingang der beiden Komparatoren V1 und V2 (im gezeichneten Beispielsfall ist dies der invertierende Eingang des betreffenden und als Operationsverstärker ausgebildeten Komparators V1 bzw. V2) gelegt. Der andere Eingang (im Beispielsfall der nichtinvertierende Eingang) der beiden Komparatoren V1 und V2 wird durch je ein Referenzpotential $U_{B1}$ bzw. $U_{B2}$ (bezogen auf Masse) beaufschlagt. Die genannte Verbindung $R_A$ ist ein Widerstand.

Eine weitere Sekundärwicklung $W_O$ des Transformators Tr des Schaltnetzteils liegt einerseits an Masse und andererseits an der Anode einer Diode $D_B$, deren Kathode einerseits über einen Kondensator $C_B$ an Masse liegt und andererseits mit dem von der Primärwicklung $W_p$ des Transformators Tr beaufschlagten Eingang der beiden Komparatoren V1 und V2 verbunden ist. Ein Widerstand $R_A$ ist sowohl in der Verbindung zwischen den beiden Komparatoren V1, V2 zur Primärwicklung $W_p$ als auch in der Verbindung zwischen der Kathode der Diode $D_B$ zu der genannten Primärwicklung vorgesehen.

Bei dem soeben beschriebenen Ausführungsbeispiel für die Ausgestaltung des zusätzlich vorgesehenen Oszillators FO muss die Betriebsspannung $U_B$ für diesen Oszillator FO (die auch die übrigen Komponenten der Regelschaltung RS versorgen kann) über den zuletzt genannten Vorwiderstand $R_A$ aufgebaut und — wenn der Schaltnetzteil angeschwungen ist — mittels der Sekundärwicklung $W_O$ und der Diode $D_B$ gehalten werden. Der Kondensator $C_B$ wirkt als Ladekondensator. Der Widerstand $R_A$ dient somit als Anlaufwiderstand.

Der eigentliche Oszillator FO besteht aus den beiden Flip-Flopzellen FF1 (set-dominant) und FF2 (reset-dominant) und den beiden Komparatoren V1 und V2. Er blockiert die Wirkung der Regelschaltung RS über deren Ausgangsteil PDM auf die Steuerelektrode des Schalttransistors T, indem er den durch das erste RS-Flip-Flop FF1 gegebenen Fehlerspeicher setzt [$U_F = H$ ( = high)] und startet den durch den im Normalbetrieb aktiven Teil des Sperrwandler-Schaltnetzteils gegebenen «Schwungrad-Oszillator» durch die positive Flanke des Signals $U_{st}$ startet, das durch den Q-Ausgang der zweiten Flip-Flopzelle FF2 (also durch Q2) gegeben ist.

Der Fehlerindikator FI ist in dem gezeigten Ausführungsbeispiel durch ein ODER-Gatter gegeben, dessen Eingänge die Fehlergrössen darstellen und dessen Ausgang zusammen mit dem Setzeingang S1 des ersten Flip-Flops FF1 den Fehlerspeicher FF1 setzt. Bei gesetztem Zustand des ersten Flip-Flops FF1 ist also stets wenigstens ein Betriebsfehler im Sperrwandler-Schaltnetzteil oder in dessen Spannungsversorgung anhängig.

In diesem Zustand sperrt die erste Flip-Flopzelle FF1 die Steuerung des Schalttransistors T durch die Regelschaltung RS. Der Schaltnetzteil wird in dem aus Fig. 5 ersichtlichen Zeitpunkt 1 abgeschaltet. Weil nunmehr über die Wicklung $W_O$ keine Energie mehr über die pn-Diode DB zugeführt wird, nimmt auch die durch die beiden Komparatoren V1 und V2 zu überwachende Betriebsspannung $U_B$ ab.

Ist nun hierdurch die Spannung $U_B$ unter den Wert der am ersten Komparator V1 liegenden Referenzspannung $U_{B1}$ gesunken, so setzt der Komparator V1 das zweite Flip-Flop FF2 — und im Falle, dass der Setzeingang S1 des ersten Flip-Flops FF1 sich auf dem Pegel L ( = Low) befindet — auch das erste Flip-Flop FF1 zurück. Dieses Verhalten ist in dem Zeitdiagramm in Fig. 5 durch den Zeitpunkt 2 dargestellt. Aufgrund dieser Rücksetzung wird die interne Versorgungsspannung $U_I$ für die Stufen der Regelschaltung RS abgeschaltet, wodurch die Stromaufnahme der Regelschaltung RS (Strom aus $U_B$) so weit sinkt, dass die Spannung $U_B$ durch den Strom ~ $(U_p/R_A)$ wieder ansteigen kann ($U_p \gg U_B$).

Erreicht nun $U_B$ den Wert der Spannung $U_{B2}$ (also der Referenzspannung am zweiten Komparator V2, was durch den Zeitpunkt 3 im Diagramm gemäss Fig. 5 angezeigt ist), so wird der Schaltnetzteil wie bei ungestörtem Betrieb gestartet, was durch die positive Flanke der Ausgangsspannung $U_{st}$ am Ausgang Q2 der Flip-Flopzelle FF2 bewirkt wird. Liegt dann immer noch eine Fehlermeldung am ODER-Gatter FI vor, so blockiert der Fehlerspeicher FF1 erneut den Ausgang PDM der Regelschaltung RS. Der Vorgang wiederholt sich dann bei Vorhandensein einer solchen Fehlermeldung laufend, so dass der Schalttransistor T dauernd gesperrt bleibt.

Wird hingegen der Fehler beseitigt und hierdurch ein fehlerfreier Zustand des Schaltnetzteils und damit eine Null-Fehler-Anzeige an den Eingängen des Fehlerindikators FI erreicht, so startet der Schaltnetzteil wieder im Normalbetrieb, was durch den Zeitpunkt 6 im Diagramm gemäss Fig. 5 angezeigt ist.

Tritt nun anstelle der das bisher beschriebene Verhalten der Schaltung gemäss Fig. 4 bewirkenden Betriebsstörungen auf der Primärseite des Transformators Tr ein Fehler auf der Sekundärseite auf (z.B. durch Kurzschluss in dem die zu versorgende Nachfolgeschaltung $R_L$ enthaltenden Sekundärkreis) auf, so liegt es an der Ansprechzeit des Fehlerindikators FI, wie viele Schwingungen des Schaltnetzteils noch erfolgen, bis die Steuerung des Schalttransistors T durch die Regelschaltung RS endlich blockiert ist. Es empfiehlt sich deshalb, das Verhältnis der pro Zeiteinheit vom Oszillator FO gelieferten Unterbrechungsimpulse zur Anzahl der in der gleichen Zeitspanne im Schaltnetzteil aufgrund der Wirkung der Regelschaltung RS ausgelösten Schwingungen entsprechend klein einzustellen. Erfahrungsgemäss ist hierfür ausreichend, wenn die Frequenz des zusätzlichen Oszillators FO auf $\leq 100$ Hz eingestellt wird. Die Frequenz im Normalbetrieb des Schaltnetzteils aufgrund der Wirkung der Regelschaltung RS beträgt demgegenüber z.B. 30 KHz.

In Fig. 4a ist eine einfache Möglichkeit für die Beaufschlagung des Fehlerindikators FI für den Fall dargestellt, dass die zu überwachende Fehlerquelle durch eine Betriebsspannung bzw. einen Strom gegeben ist. Hierzu wird die von dieser Fehlerquelle gegebene Spannung U in einem Komparator k mit einer festen Referenzspannung $U_{ref}$ verglichen und das Vergleichsergebnis einem Eingang des Fehlerindikators FI zugeführt.

Handelt es sich um die Überwachung einer Betriebstemperatur an einer vorgesehenen Überwachungsstelle des Schaltnetzteils oder der von ihm versorgten Schaltung, so wird die an der Überwachungsstelle entstehende Temperatur auf einen temperaturabhängigen Widerstand Se zur Einwirkung gebracht. Der Temperatursensor Se bildet zusammen mit einem Festwiderstand r3 einen durch eine Referenzspannung $U_{ref}$ beaufschlagten Spannungsteiler, dessen Teilerpunkt am einen Eingang eines Komparators k liegt. Der andere Eingang dieses Komparators k wird durch den Teilerpunkt eines zweiten Spannungsteilers gesteuert, der aus den beiden Festwiderständen r1 und r2 gebildet ist und der ebenfalls durch die genannte Referenzspannung $U_{ref}$ beaufschlagt ist. Durch den Ausgang des Komparators k wird der der betreffenden Fehlerquelle zugeordnete Eingang des Fehlerindikators FI gesteuert, wie dies aus Fig. 4b ersichtlich ist.

Bei der Beschreibung der Wirkung der beiden im Oszillator FO vorgesehenen Flip-Flopzellen FF1 und FF2 ist oben dargelegt worden, dass aufgrund der Rücksetzung des ersten Flip-Flops FF1 (Zeitpunkt 2 im Diagramm gemäss Fig. 5) die interne Versorgungsspannung $U_I$ für die einzelnen Stufen der Regelschaltung RS abgeschaltet wird. Dies geschieht am einfachsten, indem durch den Ausgang Q2 der zweiten Flip-Flopzelle FF2 (d.h. also durch die Spannung $U_{st}$) Eine Schaltanlage Sch gesteuert wird, die den die Spannung $U_I$ führenden Versorgungsanschluss mit den durch diese zu beaufschlagenden Stellen der Regelschaltung RS verbindet. Die Schaltanlage kann z.B. durch einen dem Transistor T entsprechenden Schalttransistor gegeben sein. Auf jeden Fall soll die Schaltanlage Sch derart ausgebildet sein, dass sie im Falle $U_{st}$ = H ( = high) die Spannung $U_I$ für die Versorgung der Regelschaltung RS freigibt und im Falle $U_{st}$ = L ( = low) die Versorgung der Regelschaltung RS sperrt.

Das Verhalten der beiden Flip-Flops FF1 und FF2 ist in der Zeichnung gemäss Fig. 4 mit aufgenommen.

Es empfiehlt sich, wenn der Wickelsinn der zur Beaufschlagung der beiden Komparatoren V1 und V2 im Oszillator FO vorgesehenen Sekundärwicklung $W_O$ gleich dem Wickelsinn der zur Beaufschlagung des elektronischen Geräts $R_L$ vorgesehenen Sekundärwicklung $W_s$ eingestellt ist, weil damit die Sekundärspannung $U_s$ unmittelbar kontrolliert werden kann (Über- und Unterspannungskontrolle).

**Patentansprüche**

1. Sperrwandler-Schaltnetzteil zur Versorgung eines elektrischen Geräts, bei dem die Primärwicklung ($W_p$) eines Transformators (Tr) in Serie mit der den zu schaltenden Strom führenden Strecke eines Schalttransistors (T) an die durch Gleichrichtung der Netzwechselspannung erhaltene Gleichspannung gelegt und eine Sekundärwicklung ($W_s$) des Transformators (Tr) zur Stromversorgung des elektrischen Geräts vorgesehen ist, die Steuerelektrode des Schalttransistors (T) durch den Ausgang einer Regelschaltung (RS) gesteuert ist und bei dem die Stromversorgung der Regelschaltung (RS) durch eine weitere Sekundärwicklung (W$_H$) des Transformators (Tr) erfolgt und die Regelschaltung (RS)

einen der Regelspannungserzeugung dienenden Schaltungsteil (RSE) mit einem nachgeschalteten Regelverstärker (RV),

einen der Impulsaufbereitung dienenden Schaltungsteil (IAB),

einen Strom-Spannungswandler (SSW), der als Istwert-Geber eine dem Primärstrom (I$_p$) proportionale Spannung (U$_{Ip}$) liefert, sowie

einen mit einem ersten Eingang an den Regelverstärker-Ausgang, mit einem zweiten Eingang den Ausgang des Impulsaufbereitungs-Schaltungsteils (IAB), mit einem dritten Eingang an den Ausgang des Strom-Spannungswandlers (SSW) und mit einem Ausgang an die Steuerelektrode des Schalttransistors (T) angekoppelten Pulsdauer-Modulator (PDM), enthält,

dadurch gekennzeichnet, dass der den Schalttransistor (T) steuernde Pulsdauer-Modulator (PDM) zusätzlich durch einen in seinem aktiven Zustand periodische Impulse an ihn abgebenden Oszillator (FO) derart beeinflusst ist, dass durch jeden dieser Unterbrechungsimpulse eine Blockade der normalen Steuerung des Schalttransistors (T) durch die Regelschaltung (RS) erfolgt, dass dabei eine Aktivierung des Oszillators (FO) durch die einzelnen — eine Gefährdung des Schaltnetzteils beim Abweichen von ihrem Normalverhalten bedeutenden — Betriebsparameter des Schaltnetzteils gegeben ist, während beim Normalverhalten aller dieser Parameter eine Beeinflussung des Schalttransistors (T) durch den Oszillator (FO) unterbunden ist, und dass schliesslich die vom Oszillator (FO) in dessen aktivem Zustand an den Pulsdauer-Modulator (PDM) abgegebenen Unterbrechungsimpulse sowie deren Frequenz derart auf das Zeitverhalten der Regelschaltung (RS) abgestimmt sind, dass nach jedem dieser Unterbrechungsimpulse eine Reaktivierung der Steuerung des Schalttransistors (T) durch die normal weiterarbeitende Referenzspannung (RS) stattfindet.

2. Sperrwandler-Schaltnetzteil nach Anspruch 1, dadurch gekennzeichnet, dass der zur Aktivierung des Oszillators (FO) dienende Eingang desselben durch einen als Fehlerindikator wirksamen Schaltungsteil (FI) gesteuert ist, der eine Anzahl von — jeweils einem der zu überwachenden Betriebsparameter zugeordneten — Eingängen (F1, F2, ...) aufweist, und dass dieser Schaltungsteil (FI) derart ausgestaltet ist, dass sein Ausgang nur beim normalen Verhalten aller dieser Betriebsparameter einen ersten logischen Pegel und in allen anderen Fällen einen zweitenn logischen Pegel aufweist.

3. Sperrwandler-Schaltnetzteil nach Anspruch 2, dadurch gekennzeichnet, dass der Fehlerindikator (FI) durch ein ODER-Gatter realisiert ist, dessen Eingänge jeweils einem der zu überwachenden Betriebsparameter (F1, F2, ...) zugeordnet und durch den jeweils zugeordneten Betriebsparameter durch eine logische «1» bei abnormalem und durch eine logische «0» bei normalem Verhalten des betreffenden Betriebsparameters jeweils beaufschlagt sind.

4. Sperrwandler-Schaltnetzteil nach Anspruch 2 oder 3, dadurch gekennzeichnet, dass der Ausgang des Fehlerindikators (FI) an den Setzeingang (S1) eines ersten statischen Flip-Flops (FF1) und dessen Ausgang (Q1) an einem ihm zugeordneten und eine Blockierung der Steuerung des Schalttransistors (T) durch die Regelschaltung (RS) bei entsprechender Beaufschlagung ermöglichenden Eingang des Ausgangsteils (PDM) der Regelschaltung (RS) gelegt ist, dass ausserdem sowohl der dem Schalttransistor (T) abgewandte Anschluss der Primärwicklung (W$_p$) des Transformators (Tr) des Sperrwandler-Schaltnetzteils über einen Widerstand (R$_A$) gleichzeitig an den einen Eingang zweier — an ihrem anderen Eingang durch je eine Referenzspannung (U$_{B1}$, U$_{B2}$) beaufschlagter — Komparatoren (V1, V2) gelegt und die auf diese Weise von der Primärwicklung (W$_p$) her beaufschlagten beiden Eingänge der Komparatoren (V1, V2) einerseits über einen Kondensator (C$_B$) mit Masse und andererseits mit der Kathode einer Diode (D$_B$) und die Anode dieser Diode (D$_B$) mit dem Ausgang einer Sekundärwicklung (W$_O$) des Transformators (Tr) verbunden ist und der Eingang dieser Sekundärwicklung (W$_O$) an Masse liegt, dass weiterhin der Ausgang des ersten Komparators (V1) zur Steuerung des Rücksetzeingangs (R1) sowohl des ersten statischen Flip-Flops (FF1) als auch des Rücksetzeingangs (R2) eines zweiten statischen Flip-Flops (FF2) dient, dass ferner der Setzeingang (S2) des zweiten statischen Flip-Flops (FF2) am Ausgang des zweiten Komparators (V2) liegt und dass schliesslich der Informationsausgang (Q2) des zweiten Flip-Flops (FF2) an einem ihm eigens zugeordneten Eingang des Ausgangsteils (PDM) der Regelschaltung gelegt und dieser Eingang des Ausgangsteils (PDM) der Regelschaltung (RS) ebenfalls derart ausgestaltet ist, dass er bei entsprechender Beaufschlagung durch den Informationsausgang (Q2) des zweiten Flip-Flops (FF2) die Steuerung des Schalttransistors (T) durch die Regelschaltung (RS) blockiert und dass ausserdem durch diesen Informationsausgang (Q2) die innere Versorgungsspannung (U$_I$) der Regelschaltung gleichphasig geschaltet wird.

5. Sperrwandler-Schaltnetzteil nach Anspruch 4, dadurch gekennzeichnet, dass die zur Beaufschlagung durch die beiden Flip-Flops (FF1, FF2) vorgesehenen beiden Eingänge des Ausgangsschaltungsteils (PDM) bei übereinstimmendem Pegel des sie jeweils steuernden Ausgangs (Q1, Q2) des betreffenden Flip-Flops (FF1, FF2) sich in übereinstimmender Weise verhalten.

6. Sperrwandler-Schaltnetzteil nach Anspruch 5, dadurch gekennzeichnet, dass der Ausgangsteil (PDM) der Regelschaltung durch ein UND-Gatter oder durch ein NOR-Gatter realisiert ist, wobei je ein Eingang des den Ausgangsteil bildenden Gatters durch je einen ihm jeweils zugeordneten Teil der Regelschaltung (RS) oder durch das ihm zugeordnete statische Flip-Flop (FF1, FF2) des Oszillators (FO) gesteuert ist.

7. Sperrwandler-Schaltnetzteil nach einem der Ansprüche 1 bis 6, dadurch gekennzeichnet, dass das Verhältnis der Frequenz des Oszillators (FO) zur Frequenz im zeitlichen Verhalten der Regelschaltung (RS) auf ein Verhältnis im Bereich von 1:10 bis 1:1000 eingestellt sind.

8. Sperrwandler-Schaltnetzteil nach einem der Ansprüche 1 bis 7, dadurch gekennzeichnet, dass der Wickelsinn der die beiden Komparatoren (V1, V2) versorgenden Sekundärwicklungen (W$_O$) gleich dem Wickelsinn der übrigen Sekundärwicklungen des Transformators (Tr) ist.

## Claims

1. A flyback-converter switch-mode power supply unit for an electrical device, where the primary winding (W$_p$) of a transformer (Tr) is connected in series with the controlled current path of a switching transistor (T) to the d.c. voltage obtained by rectification of the mains a.c. voltage, a secondary winding (W$_s$) of the transformer (Tr) provides the current supply for the electrical device, the control electrode of the switching transistor (T) is controlled by the output of a regulating circuit (RS), the current supply of the regulating circuit (RS) is provided by a further secondary winding (W$_H$)) of the transformer (Tr), and the regulating circuit (RS) contains:

a circuit component (RSE) which generates the regulating voltage and is followed by a regulating amplifier (RV);

a circuit component (IAB) which prepares the pulses;

a circuit-voltage converter (SSW) which acts as an actual value generator to supply a voltage (U$_{Ip}$) proportional to the primary current (I$_p$); and

a pulse duration modulator (PDM) coupled by its first input to the regulating amplifier output, by its second input to the output of the pulse preparation circuit component (IAB), by its third input to the output of the current-voltage converter (SSW); and to the control electrode of the switching transistor (T) by an output;

characterised in that the pulse duration modulator (PDM) which controls the switching transistor (T) is additionally influenced by an oscillator (FO) which emits periodic pulses to said pulse duration modulator when in its active state, that each of the interrupt pulses serves to block the normal control of the switching transistor (T) by the regulating circuit (RS), that the oscillator (FO) is activated by the individual operating parameters of the switch-mode power supply unit, which signify that the switch-mode power supply unit is endangered if they vary from their normal characteristics, whereas when all these parameters behave normally influence of the switching transistor (T) by the oscillator (FO) is suppressed, and that finally the interrupt pulses from the active state oscillator (FO) to the pulse duration modulator (PDM), and their frequency, are tuned to the time response of the regulating circuit (RS) such that following each of these interrupt pulses there is a reactivation of the control of the switching transistor (T) by the regulating circuit (RS) which continues to operate normally.

2. A flyback-converter switch-mode power supply unit as claimed in Claim 1, characterised in that the input thereof which serves to activate the oscillator (FO) is controlled by a circuit component (FI) which serves as fault indicator and which has a number of inputs (F1, F2, ...), each assigned to a respective one of the operating parameters to be monitored, and that this circuit component (FI) is designed to be such that its output exhibits a first logic level only when all said operating parameters are behaving normally, and exhibits a second logic level in all other cases.

3. A flyback-converter switch-mode power supply unit as claimed in Claim 2, characterised in that the fault indicator (FI) consists of an OR-gate, the inputs of which are each assigned to a respective one of the operating parameters (F1, F2, ...) to be monitored, and on the basis of the assigned operating parameter, are each supplied with a logic «1» when the operating parameter in question is behaving abnormally and with a logic «0» when the operating parameter in question is behaving normally.

4. A flyback-converter switch-mode power supply unit as claimed in Claim 2 or 3, characterised in that the outpt of the fault indicator (FI) is connected to the set input (S1) of a first static flip-flop (FF1), and the output (Q1) of the latter is connected to an assigned input of the output component (PDM) of the regulating circuit (RS), which input facilitates the blockage of the control of the switching transistor (T) by the regulating circuit (RS) when it is supplied with the appropriate signal, that moreover that terminal of the primary winding (W$_p$) of the transformer (Tr) of the flyback-converter switch-mode power supply unit remote from the switching transistor (T) is connected simultaneously to the first input of two comparators (V1, V2), via a resistor (R$_A$) each of which is supplied at its other input with a reference voltage (U$_{B1}$, U$_{B2}$), and also the two inputs of the comparators (V1, V2), linked in this way to the primary winding (W$_p$) are connected to earth via a capacitor (C$_B$) and directly to the cathode of a diode (D$_B$) whose anode is connected to the output of a secondary winding (W$_O$) of the transformer (Tr) whose input is connected to earth, that moreover the output of the first comparator (V1) serves to control both the reset input (R1) of the first static flip-flop (FF1) and the reset input (R2) of a second static flip-flop (FF2), that moreover the set input (S2) of the second static flip-flop (FF2) is connected to the output of the second comparator (V2), and that finally the information output (Q2) of the second flip-flop (FF2) is connected to a specially-assigned input of the output component (PDM) of the regulating circuit, and that this input of the output component (PDM) of the regulating circuit (RS) is likewise designed such that when it is supplied with appropriate signals from the information output (Q2) of the second flip-flop (FF2) it blocks the control of the switching transistor (T) by the regulating circuit (RS) and that the internal supply voltage (U$_I$) of the regulating circuit is switched inphase by this information output (Q2).

5. A flyback-converter switch-mode power supply unit as claimed in Claim 4, characterised in that the two inputs of the output circuit component (PDM) linked to the two flip-flops (FF1, FF2) behave in an identical fashion when the levels occurring at the outputs (Q1, Q2) of the respective flip-flop (FF1, FF2) by which they are controlled are identical.

6. A flyback-converter switch-mode power supply unit as claimed in Claim 5, characterised in that the output component (PDM) of the regulating circuit is formed by an AND-gate and a NOR-gate, where an input of the gate which forms the output components is controlled by an assigned part of the regulating circuit (RS) or by the assigned static flip-flop (FF1, FF2) of the oscillator (FO).

7. A flyback-converter switch-mode power supply unit as claimed in one of Claims 1 to 6, characterised in that the ratio of the frequency of the oscillator (FO) to the frequency of the time response of the regulating circuit (RS) is set in the range from 1:1 to 1:1000.

8. A flyback-converter switch-mode power supply unit as claimed in one of Claims 1 to 7, characterised in that the winding direction of the secondary winding ($W_O$) which supplies the two comparators (V1, V2) is identical to the winding direction of the other secondary windings of the transformer (Tr).

## Revendications

1. Bloc d'alimentation à convertisseur à oscillateur bloqué pour l'alimentation d'un appareil électrique, dans lequel l'enroulement primaire ($W_p$) d'un transformateur (Tr) en série avec la voie véhiculant le courant à commuter, d'un transistor de commutation (T) est placé à la tension continue fournie par le redressement de la tension alternative du réseau, et il est prévu un enroulement secondaire ($W_s$) du transformateur (Tr) pour réaliser l'alimentation en courant de l'appareil électrique, et l'électrode de commande du transistor de commutation (T) est commandée par la sortie d'un circuit de réglage (RS), et dans lequel l'alimentation en courant du circuit de réglage (RS) est réalisée par un autre enroulement secondaire ($W_H$) du transformateur (Tr) et le circuit de réglage (RS) contient

une partie de circuit (RSE) servant à produire la tension de réglage et en aval de laquelle est branché un amplificateur de réglage (RV),

une partie de circuit (IAB) servant à préparer les impulsions,

un convertisseur courant-tension (SSW), qui délivre, en tant que générateur de valeurs réelles, une tension ($U_{Ip}$) proportionnelle au courant primaire ($I_p$), et

un modulateur d'impulsions en durée (PDM) accouplé par une premiere entrée à la sortie de l'amplificateur de réglage, par une seconde entrée à la sortie de la partie de circuit (IAB) de préparation d'impulsions, par une troisième entrée à la sortie du convertisseur courant-tension (SSW) et par une sortie à l'électrode de commande du transistor de commutation (T),

caractérisé par le fait que le modulateur d'impulsions en durée (PDM), qui commande le transistor de commutation (T), est influencé en supplément par un oscillateur (FO) qui dans son état active, envoie des impulsions périodiques au modulateur, de telle sorte que chacune de ces impulsions d'interruption produit un blocage de la commande normale du transistor de commutation (T) par le circuit de réglage (RS), une activation de l'oscillateur (FO) est réalisée au moyen des différents paramètres de fonctionnement du bloc d'alimentation commuté — impliquant une mise en danger du bloc d'alimentation commuté dans le cas d'un écart par rapport au comportement normal desdits paramètres —, tandis que dans le cas du comportement normal de tous ces paramètres, une influence de l'oscillateur (FO) sur le transistor de commutation (T) est supprimée, et qu'enfin les impulsions d'interruption, délivrées par l'oscillateur (FO), lorqu'il est à l'état active, au modulateur d'impulsions en durée (PDM) ainsi que leur fréquence sont accordées sur le comportement dans le temps du circuit de réglage (RS) de telle sorte qu'après chacune de ces impulsions d'interruption, il se produit une réactivation de la commande du transistor de commutation (T) par le circuit de réglage (RS) continuant à travailler de façon normale.

2. Bloc d'alimentation à convertisseur à oscillateur bloqué suivant la revendication 1, caractérisé par le fait que l'entrée de l'oscillateur (FO), qui sert à activer ce dernier, est commandée par une partie de circuit (FI) agissant en tant qu'indicateur d'erreurs et qui comporte un nombre d'entrée (F1, F2, ...) associées chacune à l'un des paramètres de fonctionnement à contrôler, et que cette partie de circuit (FI) est agencée de telle sorte que sa sortie possède un premier niveau logique uniquement lors du comportement normal de tous ces paramètres de fonctionnement, et un second niveau logique dans tous les autres cas.

3. Bloc d'alimentation à convertisseur à oscillateur bloqué suivant la revendication 2, caractérisé par le fait que l'indicateur d'erreurs (FI) est réalisé au moyen d'une porte OU, dont les entrées sont associées chacune à l'un des paramètres de fonctionnement (F1, F2, ...) devant être contrôlés et sont chargées par les paramètres de fonctionnement respectivement associés, par un « 1 » logique dans le cas d'un comportement anormal du paramètre de fonctionnement considéré et par un « 0 » logique dans le cas du comportement normal du paramètre de fonctionnement considéré.

4. Bloc d'alimentation à convertisseur à oscillateur bloqué suivant la revendication 2 ou 3, caractérisé par le fait que la sortie de l'indicateur d'erreurs (FI) est raccordée à l'entrée de positionnement (S1) d'une première bascule bistable statique (FF1) et que sa sortie (Q1) est raccordée à une entrée de la partie de sortie (PDM) du circuit de réglage (RS), qui est associée à cet indicateur et permet un blocage de la commande du transistor de commutation (T) par le circuit de réglage (RS) dans le cas d'un chargement correspondant, qu'en outre aussi bien la borne, située à l'opposé du transistor de commutation (T), de l'enroulement primaire ($W_p$) du transformateur (Tr) du bloc d'alimentation à convertisseur à oscillateur bloqué est raccordée simultanément, par l'intermédiaire d'une résistance ($R_A$), à une première entrée de deux comparateurs (V1, V2) — chargés au niveau de leur seconde entrée par une tension respective de référence ($U_{B1}$, $U_{B2}$) — et les deux entrées des comparateurs (V1, V2) sont reliées d'une part à la masse par l'intermédiaire d'un condensateur ($C_B$) et d'autre part à la cathode d'une diode ($D_B$) et l'anode de cette diode ($D_B$) est reliée à la sortie d'un enroulement secondaire ($W_O$) du transformateur (Tr) et l'entrée de cet enroulement secondaire ($W_O$) est

raccordée à la masse, qu'en outre la sortie du premier comparateur (V1) sert à commander l'entrée de remise à l'état initial (R1) aussi bien de la première bascule bistable statique (FF1) que de l'entrée de remise à l'état initial (R2) d'une seconde bascule bistable (FF2), qu'en outre l'entrée de positionnement (S2) de la seconde bascule bistable statique (FF2) est raccordée à la sortie du second comparateur (V2) et qu'enfin la sortie d'informations (Q2) de la seconde bascule bistable (FF2) est raccordée à une entrée, qui lui est associée en propre, de la partie de sortie (PDM) du circuit de réglage et que cette entrée de la partie de sortie (PDM) du circuit de réglage (RS) est également agencée de telle sorte qu'elle bloque la commande du transistor de commutation (T) par le circuit de réglage (RS), dans le cas où elle est chargée de façon correspondante par la sortie d'informations (Q2) de la seconde bascule bistable (FF2) et qu'en outre la tension intérieure d'alimentation (U$_I$) du circuit de réglage est branchée en phase par cette sortie d'informations (Q2).

5. Bloc d'alimentation à convertisseur à oscillateur bloqué suivant la revendication 4, caractérisé par le fait que les deux entrées, qui sont prévues pour être chargées par les deux bascules bistables (FF1, FF2), de la partie de circuit de sortie PDM) se comportent de façon coïncidente dans le cas où les niveaux des sorties (Q1, Q2), qui commandent respectivement les entrées de la partie de circuit de sortie, des bascules bistables (FF1, FF2) considérées coïncident.

6. Bloc d'alimentation à convertisseur à oscillateur bloqué suivant la revendication 5, caractérisé par la partie de sortie (PDM) du circuit de réglage est réalisée au moyen d'une porte ET ou au moyen d'une porte NON-OU, auquel cas une entrée respective de la porte constituant la partie de sortie est commandée par une partie respective, qui lui est associée, du circuit de réglage (RS) ou bien par la bascule bistable statique (FF1, FF2), qui lui est associée, de l'oscillateur (FO).

7. Bloc d'alimentation à convertisseur à oscillateur bloqué suivant l'une des revendications 1 à 6, caractérisé par le fait que le rapport de la fréquence de l'oscillateur (FO) et la fréquence du comportement temporel du circuit de réglage (RS) est réglé à une valeur située dans la gamme allant de 1:10 à 1:1000.

8. Bloc d'alimentation à convertisseur à oscillateur bloqué suivant l'une des revendications 1 à 7, caractérisé par le fait que le sens de bobinage de l'enroulement secondaire (W$_O$), qui alimente les deux comparateurs (V1, V2), est le même que celui des autres enroulements secondaires du transformateur (Tr).

FIG 1

FIG 2

$U_N > 0$ heißt:
S bleibt offen

$U_N < 0$ heißt:
S wird geschlossen
(Impulsstart)

Sperrphase — Leitph
Sist offen | Sist geschlossen

# FIG 3

# FIG 5

FIG 4

FIG 4a

FIG 4b